Europäisches Patentamt

European Patent Office

Office européen des brevets

(19)

(11) Numéro de publication : **0 301 965 B1**

(12) **FASCICULE DE BREVET EUROPEEN**

(45) Date de publication du fascicule du brevet :
21.08.91 Bulletin 91/34

(51) Int. Cl.⁵ : **F16D 23/14**

(21) Numéro de dépôt : 88401957.1

(22) Date de dépôt : 28.07.88

(54) **Tube-guide pour butée de débrayage de boîte de vitesses de véhicule automobile.**

(30) Priorité : 28.07.87 FR 8710701

(43) Date de publication de la demande :
01.02.89 Bulletin 89/05

(45) Mention de la délivrance du brevet :
21.08.91 Bulletin 91/34

(84) Etats contractants désignés :
DE ES GB IT

(56) Documents cités :
DE-C- 975 377
FR-A- 2 305 639
US-A- 4 531 420

(73) Titulaire : PROCAL, Société anonyme dite
Les Franchises
F-52200 Langres (FR)

(72) Inventeur : Saxod, Michel
Bourg
F-52200 Langres (FR)

(74) Mandataire : Nony, Michel et al
Cabinet NONY & CIE, 29, rue Cambacérès
F-75008 Paris (FR)

## Description

La présente invention est relative à un tube-guide pour butée de débrayage de boîte de vitesses de véhicule automobile.

D'une manière générale, les butées de débrayage coulissent sur un manchon tubulaire engagé axialement autour de l'arbre d'entrée de la boîte de vitesses, emmanché à force dans un alésage du carter de celle-ci, une bague d'étanchéité, généralement du type à lèvre, étant interposée entre le carter et l'arbre d'entrée.

Dans les réalisations traditionnelles, la bague d'étanchéité est une pièce montée séparément du manchon formant tube-guide. Cette solution présente l'inconvénient que lorsqu'il devient nécessaire de changer la bague d'étanchéité, il faut procéder au démontage complet de la boîte.

Pour éviter cet inconvénient, on utilise couramment des tubes-guide dans lesquels la bague d'étanchéité est montée à l'intérieur d'un logement défini par une portée d'extrémité tubulaire, de plus grand diamètre que le manchon tubulaire. La portée d'extrémité tubulaire est reliée d'un seul tenant audit manchon par une portée radiale sur laquelle est solidarisée, notamment par soudure, une platine formant bride de fixation sur la face extérieure de la paroi du carter de la boîte de vitesses.

Avec cette solution, si la bague d'étanchéité est défaillante, elle peut être démontée en séparant la boîte du moteur, sans démontage de la boîte. Le tube-guide et la bague étant accessibles de l'extérieur, il suffit de démonter les organes de fixation fixant la bride solidaire du tube-guide de la face extérieure de la paroi du carter de boîte puis d'extraire le tube-guide et la bague d'étanchéité.

Cependant, cette réalisation de tube-guide met en oeuvre une fabrication complexe nécessitant d'une part la formation d'un tube élargi à son extrémité de manière à former la portée tubulaire de réception de bague d'étanchéité, d'autre part, la fabrication séparée d'une platine destinée à former la bride de fixation, et enfin la soudure de la platine sur la portée radiale du tube-guide entre le manchon tubulaire et la portée tubulaire frontale.

On connaît par ailleurs, par FR-A-2305639, un tube-guide pour butée de débrayage de boîte de vitesses de véhicule automobile, comportant d'un seul tenant un manchon tubulaire apte à être engagé axialement autour de l'arbre d'entrée de la boîte de vitesses, une portée d'extrémité tubulaire apte à former un logement pour une bague d'étanchéité, de plus grand diamètre que le manchon tubulaire, reliée d'un seul tenant audit manchon par une portée radiale, et une platine pour la fixation du tube-guide sur la face extérieure de la paroi du carter de boîte de vitesses, ladite platine étant constituée par une portée radiale prolongeant d'un seul tenant une portée tubulaire coaxiale extérieurement à la portée tubulaire de réception de la bague d'étanchéité. Dans ce document, la portée de réception de la bague d'étanchéité est éloignée de l'extrémité frontale du tube-guide, ce qui rend difficile la mise en place et l'enlèvement de la bague d'étanchéité. De plus l'encombrement en longueur du tube-guide est important.

La présente invention se propose de réaliser un tube-guide d'une fabrication plus simple et économique que les tubes-guide actuellement utilisés et offrant en outre des avantages supplémentaires en ce qui concerne leur facilité de mise en place.

Le tube-guide selon l'invention, se caractérise essentiellement par le fait que la portée radiale formant bride de fixation est réalisée dans le même plan que la portée radiale reliant le manchon tubulaire du tube-guide à sa portée tubulaire formant logement pour la bague d'étanchéité, et que ladite portée tubulaire extérieure constitue un prolongement du bord d'extrémité frontal replié vers l'arrière de la portée tubulaire formant logement pour la bague d'étanchéité.

Le tube-guide selon l'invention, comprend ainsi, d'un seul tenant, un manchon tubulaire apte à s'engager sur l'arbre d'entrée de boîte de vitesses, prolongé à sa partie frontale par une portée radiale elle-même prolongée par une portée tubulaire intérieure cylindrique ou légèrement conique s'élargissant vers l'arrière dont l'extrémité est repliée vers l'arrière de manière à réaliser une portée tubulaire extérieure, cette portée tubulaire extérieure se prolongeant enfin par une portée radiale munie d'orifices, pour la fixation du tube-guide par ladite portée radiale sur le carter de boîte de vitesses.

Le tube-guide d'un seul tenant selon l'invention, peut être réalisé facilement par exemple, par emboutissage d'une tôle, notamment une tôle d'acier.

De préférence, les extrémités des portées tubulaires au niveau du bord d'extrémité frontal replié sont arrondies de façon à former des chanfreins permettant de faciliter, en ce qui concerne la portée extérieure, l'engagement du tube-guide dans l'alésage du carter de boîte de vitesses et en ce qui concerne la portée intérieure l'engagement de la bague d'étanchéité dans son logement du tube-guide, la tenue de la bague étant favorisée par une légère conicité, s'élargissant vers l'arrière de la portée axiale formant logement.

Les deux portées tubulaires reliées par le bord d'extrémité replié peuvent être jointives ou non.

Dans le but de mieux faire comprendre l'invention, on va maintenant en décrire à titre d'exemple en aucune manière limitatif, un mode de réalisation en se référant au dessin annexé dans lequel :

— la figure 1 est une vue en coupe longitudinale d'un tube-guide selon l'invention,

— la figure 2 est une vue de détail agrandi de la figure 1,

— la figure 3 illustre le tube-guide selon l'invention en position montée d'utilisation et,

— la figure 4 est une vue analogue à la figure 3 avec un tube-guide conventionnel.

Le tube-guide selon l'invention est réalisé d'un seul tenant par emboutissage d'une tôle d'acier, par exemple d'une épaisseur de 1 mm.

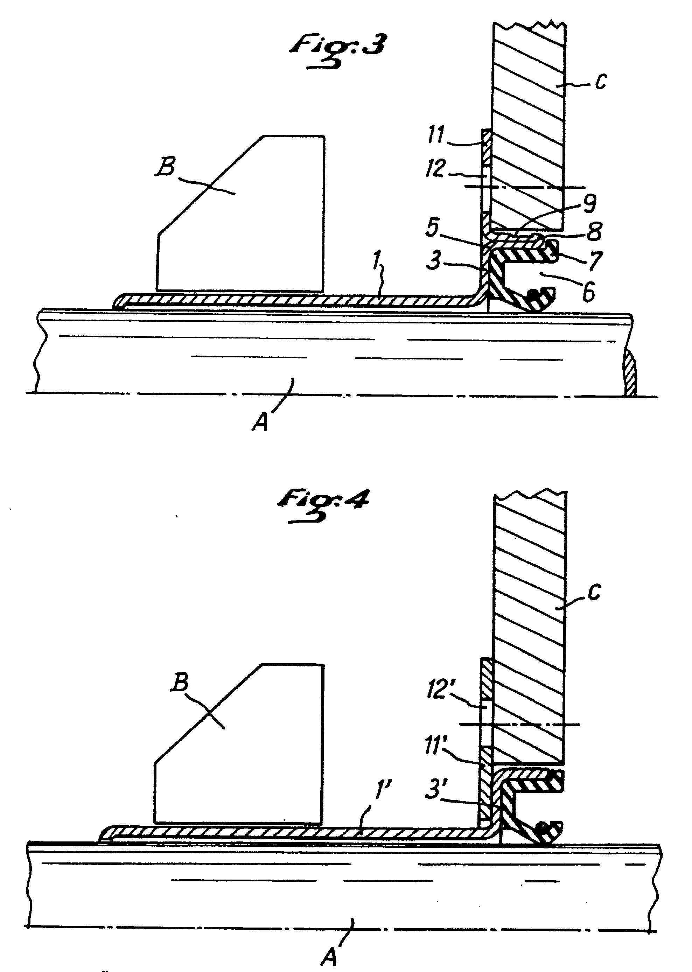

Le tube-guide comprend une partie en forme de manchon tubulaire 1 raccordé à son extrémité frontale par un arrondi 2 à une portée radiale 3 elle-même raccordée par un arrondi 4 à une portée tubulaire 5 définissant un logement 6 pour la mise en place d'une bague d'étanchéité à lèvre 7 (figure 3). La portée 5 cylindrique ou légèrement conique, s'élargissant vers l'arrière est repliée vers l'arrière au niveau de son extrémité 8 de manière à se prolonger par une portée tubulaire cylindrique extérieure et coaxiale 9. Dans l'exemple illustré, les portées tubulaires 5 et 9 sont jointives mais cette caractéristique n'est pas obligatoire.

La portée 9 se prolonge elle-même par un arrondi 10 en une portée radiale 11 dans le plan de la portée radiale 3, cette portée radiale étant munie d'orifices 12, de préférence réalisés dans des oreilles réparties à la périphérie de la portée 11 pour la fixation sur la face extérieure du carter de boîte de vitesses comme cela sera expliqué plus loin.

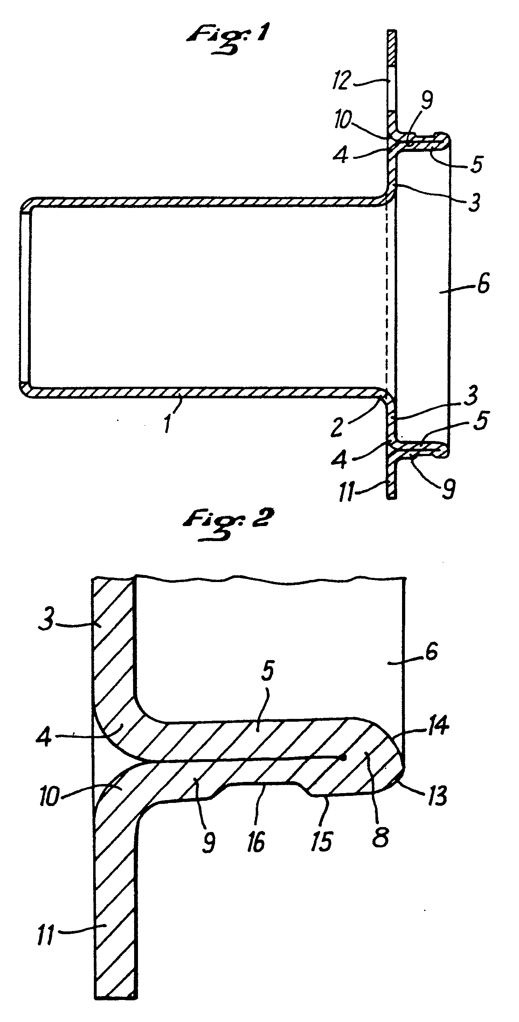

Comme on le voit le mieux sur la figure 2, le bord d'extrémité 8 reliant les portées tubulaires 5 et 9 présente à sa partie extérieure une forme arrondie 13 et à sa partie intérieure une forme arrondie 14. Sur la face extérieure de la portée 9, la partie arrondie 13 se prolonge par une partie de centrage cylindrique 15 suivie par une partie en renfoncement 16.

La présence de la partie en renfoncement 16 limite la longueur de la partie formant portée de centrage 15 ce qui permet de contrôler et limiter les efforts nécessaires à l'emmanchement du tube-guide dans l'alésage du carter et évite les risques de coincement en cas de désaxage notamment sur des machines de montage automatiques à cadence élevée.

On se réfère à la figure 3 où l'on voit le tube-guide selon l'invention en position d'utilisation.

Le tube-guide est engagé par sa partie en forme de manchon 1 sur l'arbre d'entrée A d'une boîte de vitesses dont on voit le carter en C. Une butée de débrayage B coulisse sur la paroi extérieure de la partie de manchon tubulaire 1.

La bague d'étanchéité à lèvre 7 est engagée dans l'alésage défini par la portée tubulaire 5, l'engagement de la bague étant facilité par la partie arrondie formant chanfrein 14 du bord d'extrémité 8.

Le tube-guide selon l'invention est monté dans un alésage du carter C autour de l'arbre d'entrée A. Le montage et le centrage du tube-guide dans le carter sont facilités par le bord arrondi formant chanfrein 13 du bord d'extrémité 8 du tube-guide. L'ensemble est fixé à la paroi extérieure du carter C par des vis (non représentées) s'engageant dans les orifices 12 de la paroi radiale 11 du tube-guide.

On a illustré à titre de comparaison à la figure 4 la mise en place d'un tube-guide conventionnel.

On voit que la fixation du tube-guide sur le carter est obtenue par l'intermédiaire d'organes de fixation (non représentés) s'engageant dans des orifices 12' d'une platine 11' constituant une pièce séparée et reliée par points, notamment par soudure, à la portée radiale 3' du tube-guide réalisant la liaison entre le manchon 1' et la portée tubulaire 5' constituant le logement de la bague 7'.

## Revendications

1. Tube-guide pour butée de débrayage de boîte de vitesses de véhicule automobile, comportant d'un seul tenant un manchon tubulaire (1) apte à être engagé axialement autour de l'arbre d'entrée (A) de la boîte de vitesses, une portée d'extrémité tubulaire (5) apte à former un logement (6) pour une bague d'étanchéité (7), de plus grand diamètre que le manchon tubulaire, reliée d'un seul tenant audit manchon par une portée radiale (3), et une platine pour la fixation du tube-guide sur la face extérieure de la paroi du carter (C) de boîte de vitesses, ladite platine étant constituée par une portée radiale (11) prolongeant d'un seul tenant une portée tubulaire (9) coaxiale extérieurement à la portée tubulaire (5) de réception de la bague d'étanchéité (7), caractérisé par le fait que la portée radiale (11) formant bride de fixation est réalisée dans le même plan que la portée radiale (3) reliant le manchon tubulaire (1) du tube-guide à sa portée tubulaire (5) formant logement pour la bague d'étanchéité (7), et que ladite portée tubulaire extérieure (9) constitue un prolongement du bord d'extrémité frontal replié vers l'arrière (8) de la portée tubulaire (5) formant logement pour la bague d'étanchéité (7).

2. Tube-guide selon la revendication 1, caractérisé par le fait que les extrémités des portées tubulaires (5, 9) sont arrondies (13, 14) au niveau du bord d'extrémité frontal (8).

3. Tube-guide selon l'une quelconque des revendications précédentes, caractérisé par le fait que les deux portées tubulaires (5, 9) sont jointives.

4. Tube-guide selon l'une quelconque des revendications précédentes, caractérisé par le fait que la portée tubulaire (5) formant logement pour la bague d'étanchéité est cylindrique.

5. Tube-guide selon l'une quelconque des revendications 1 à 3, caractérisé par le fait que la portée tubulaire (5) formant logement pour la bague d'étanchéité est légèrement conique s'élargissant vers l'arrière.

6. Tube-guide selon l'une quelconque des revendications 1 à 5 caractérisé par le fait que la portée tubulaire extérieure (9) comporte une partie de centrage cylindrique (15) prolongée par une partie en renfoncement (16).

7. Tube-guide selon l'une quelconque des revendications précédentes, caractérisé par le fait qu'il est réalisé par emboutissage.

8. Tube-guide selon la revendication 7, caractérisé par le fait qu'il est réalisé par emboutissage d'une tôle d'acier.

## Patentansprüche

1. Führungshülse für das Kupplungs-Ausrücklager eines Kraftfahrzeuggetriebes, umfassend eine ringförmige Manschette (1) zur axialen Aufnahme der Getriebe-Eingangswelle (A), einen damit einstückigen, einen Sitz (6) für einen Dichtungsring (7) bildenden rohrförmigen Endabschnitt (5), der einen größeren Durchmesser hat als die rohrförmige Manschette und mit dieser über einen radialen Abschnitt (3) einstückig verbunden ist, und eine damit einstückige Platte zur Befestigung der Führungshülse an der Außenfläche der Getriebe-Gehäusewand (C), wobei die Platte von einem an einen Rohrabschnitt (9) einstückig angeformten radialen Abschnitt (11) gebildet ist und der Rohrabschnitt (9) außerhalb und koaxial zu dem den Dichtungsring (7) aufnehmenden Rohrabschnitt (5) verläuft, dadurch gekennzeichnet, daß der einen Befestigungsflansch bildende radiale Abschnitt (11) in der gleichen Ebene ausgebildet ist wie der die rohrförmige Manschette (1) der Führungshülse mit ihrem den Dichtungsring (7) aufnehmenden Rohrabschnitt (5) verbindende radiale Abschnitt (3), und daß der äußere Rohrabschnitt (9) eine Verlängerung des nach hinten umgebogenen vorderen Endes (8) des den Dichtungsring (7) aufnehmenden Rohrabschnitts (5) bildet.

2. Führungshülse nach Anspruch 1, dadurch gekennzeichnet, daß die Enden der Rohrabschnitte (5, 9) im Bereich des vorderen Randes (8) abgerundet (13, 14) sind.

3. Führungshülse nach einem der vorhergehenden Ansprüche, dadurch gekennzeichnet, daß die beiden Rohrabschnitte (5, 9) zusammenhängen.

4. Führungshülse nach einem der vorhergehenden Ansprüche, dadurch gekennzeichnet, daß der einen Sitz für den Dichtungsring bildende Rohrabschnitt (5) zylindrisch ist.

5. Führungshülse nach einem der Ansprüche 1 bis 3, dadurch gekennzeichnet, daß der einen Sitz für den Dichtungsring bildende Rohrabschnitt (5) sich nach hinten leicht konisch erweitert.

6. Führungshülse nach einem der Ansprüche 1 bis 5, dadurch gekennzeichnet, daß der äußere Rohrabschnitt (9) einen zylindrischen Zentrierungsteil (15) aufweist, an den sich eine Ausnehmung (16) anschließt.

7. Führungshülse nach einem der vorhergehenden Ansprüche, dadurch gekennzeichnet, daß sie durch Tiefziehen hergestellt ist.

8. Führungshülse nach Anspruch 7, dadurch gekennzeichnet, daß sie durch Tiefziehen eines Stahlblechs hergestellt ist.

## Claims

1. Guide tube for a clutch bearing in a motor vehicle gear box, comprising, all in one piece, a tubular sleeve (1) capable of being engaged axially around the input shaft (A) of the gear box, a tubular end bearing (5) capable of forming a housing (6) for a sealing ring (7) of larger diameter than the tubular sleeve and connected in one piece to the said sleeve by a radial bearing (3), and a plate for fixing the guide tube on the exterior face of the wall of the gear-box casing (C), the said plate being formed by a radial bearing (11) prolonging all in one piece a tubular bearing (9) coaxial, externally, with the tubular bearing (5) for receiving the sealing ring (7), characterised in that the radial bearing (11) forming a fixing flange is formed in the same plane as the radial bearing (3) connecting the tubular sleeve (1) of the guide tube to its tubular bearing (5) forming the housing for the sealing ring (7), and in that the said exterior tubular bearing (9) forms a prolongation of the frontal end edge (8) folded back rearwards of the tubular bearing (5) forming the housing for the sealing ring (7).

2. Guide tube according to Claim 1, characterised in that the ends of the tubular bearings (5, 9) are rounded (13, 14) in the region of the frontal end edge (8).

3. Guide tube according to any one of the preceding claims, characterised in that the two tubular bearings (5, 9) are contiguous.

4. Guide tube according to any one of the preceding claims, characterised in that the tubular bearing (5) forming the housing for the sealing ring is cylindrical.

5. Guide tube according to any one of Claims 1 to 3, characterised in that the tubular bearing (5) forming the housing for the sealing ring is slightly conical, widening towards the rear.

6. Guide tube according to any one of Claims 1 to 5, characterised in that the exterior tubular bearing (9) comprises a cylindrical centring part (15) prolonged by an indented part (16).

7. Guide tube according to any one of the preceding claims, characterised in that it is formed by drawing.

8. Guide tube according to Claim 7, characterised in that it is formed by drawing a steel sheet.

## Fig. 1

## Fig. 2

Fig.3

Fig.4